# EUROPÄISCHE PATENTANMELDUNG

(11) **EP 3 721 982 A1**
(43) Veröffentlichungstag der Anmeldung: **14.10.2020**
(21) Anmeldenummer: 19168675.7
(22) Anmeldetag: 11.04.2019
(51) Int. Cl.: B01F 7/08, B01F 11/00, B22F 3/105

(54) **DURCH ADDITIVE FERTIGUNG HERGESTELLTES KNETELEMENT FÜR EINE MISCH- UND KNETMASCHINE**

(71) Anmelder: Buss AG, 4133 Pratteln (CH)
(72) Erfinder: Suter, André, 4310 Rheinfelden (CH); Trost, Martin, 79713 Bad Säckingen (DE)
(74) Vertreter: Henkel & Partner mbB

(57) **Zusammenfassung**

Die vorliegende Erfindung betrifft ein Knetelement für eine Misch- und Knetmaschine insbesondere für kontinuierliche Aufbereitungsprozesse umfassend einen stirnseitigen Knetabschnitt zum Kontaktieren der zu mischenden und knetenden Mischung sowie einen mit dem stirnseitigen Knetabschnitt verbundenen Fixierabschnitt zum Fixieren des Knetelements in der Misch- und Knetmaschine, wobei der stirnseitige Knetabschnitt aus einem Stahl, einer Legierung oder einem Hartstoff gebildet ist, und, wobei der Fixierabschnitt durch ein additives Fertigungsverfahren erzeugt und mit dem stirnseitigen Knetabschnitt des Knetelements verbunden ist.

## Beschreibung

Die vorliegende Erfindung betrifft ein Knetelement für eine Misch- und Knetmaschine für kontinuierliche Aufbereitungsprozesse, wie zur Herstellung von Granulat, Strangpressprofilen oder Formteilen, eine mit solchen Knetelementen bestückte Misch- und Knetmaschine sowie ein Verfahren zum Herstellen eines solchen Knetelement.

Derartige Misch- und Knetmaschinen werden insbesondere zum Aufbereiten von plastischen und/oder pastösen Massen eingesetzt. Solche Misch- und Knetmaschinen weisen ein Gehäuse auf, in welchem ein von der Innenumfangsfläche des Gehäuses begrenzter hohler Innenraum, typischerweise hohlzylindrischer Innenraum, ausgebildet ist, in welchem eine sich zumindest abschnittsweise in axialer Richtung durch den Innenraum erstreckende Schneckenwelle vorgesehen ist. Dabei bildet Schneckenwelle das Arbeitsorgan der Misch- und Knetmaschine, wobei die Schneckenwelle das zu verarbeitende Material in axialer Richtung vorwärts transportiert bzw. fördert und dabei die Komponenten des Materials miteinander vermischt und ggf. aufgeschmolzen. Beispielsweise werden derartige Misch- und Knetmaschinen zum Verarbeiten von zähplastischen Massen, zum Homogenisieren und Plastifizieren von Kunststoffen, zum Einarbeiten von Füll- und Verstärkungsstoffen sowie zum Herstellen von Ausgangsmaterialien für die Lebensmittelindustrie eingesetzt. Sehr häufig liegt das Ausgangsmaterial bzw. mindestens ein Bestandteil des Ausgangsmaterials als partikuläres Material, wie beispielsweise als Pulver oder Granulat, vor. Diese Misch- und Knetmaschinen können beispielsweise so betrieben werden, dass zunächst aus dem Ausgangsmaterial eine Schmelze erzeugt wird, bevor die so erzeugte Schmelze durch die Schneckenwelle in axialer Richtung durch die Misch- und Knetmaschine gefördert und dabei homogenisiert wird. In Abhängigkeit von dem zu mischenden Material kann die in der Misch- und Knetmaschine eingestellte Temperatur zumindest abschnittsweise zwischen 50° und 400°C betragen. Derartige Misch- und Knetmaschinen eignen sich insbesondere auch zum Herstellen von Polymergranulat, Polymerstrangpressprofilen, Polymerformteilen und dergleichen, wenn am stromabwärtigen Ende der Maschine eine geeignete Austragsvorrichtung, wie beispielsweise ein Austragsextruder, angeordnet wird und mit einer Granulationsvorrichtung oder einer ähnlichen Vorrichtung, wie mit einer intermittierenden Schneidvorrichtung, Strangdüse, Profilwerkzeug, Plattendüse oder einer ähnlichen Vorrichtung verbunden wird.

Solche Misch- und Knetmaschinen sind beispielsweise aus der CH 278 575 A sowie aus der CH 464 656 bekannt. Bei diesen Misch- und Knetmaschinen führt die Schneckenwelle vorzugsweise nicht nur eine rotative Bewegung aus, sondern bewegt sich gleichzeitig auch in der axialen Richtung, d.h. in der Richtung der Schneckenwelle, translatorisch vor und zurück. Der Bewegungsablauf zeichnet sich daher vorzugsweise dadurch aus, dass die Schneckenwelle in der axialen Richtung gesehen eine der Rotation überlagerte oszillatorische Bewegung ausführt. Dieser Bewegungsablauf ermöglicht das Einbringen von Einbauten, nämlich von Knetelementen, wie von Knetbolzen oder von Knetzähnen, in das Gehäuse der Eintrags- und Mischvorrichtung. Wegen des Vorhandenseins der Knetelemente verläuft die auf der Hauptwelle, dem sogenannten Wellenstab, angeordnete Schnecke nicht - im Querschnitt des Wellenstabs gesehen - durchgehend, sondern ist in eine Mehrzahl von einzelnen Flügelelementen unterteilt, die sich jeweils über einen bestimmten Winkelabschnitt des Querschnittsumfangs des Wellenstabes erstrecken. Benachbarte Flügelelemente sind voneinander sowohl in axialer Richtung als auch in der Außenumfangsrichtung des Wellenstabes beabstandet, d.h. zwischen benachbarten Flügelelementen ist sowohl in axialer Richtung als auch in der Außenumfangsrichtung des Wellenstabes jeweils ein Spalt vorgesehen. Wenn beispielsweise der gesamte Wellenstab der Schneckenwelle oder ein axialer Abschnitt des Wellenstabs der Schneckenwelle, bezogen auf den Querschnittsumfang, drei Flügelelemente umfasst, welche sich jeweils über einen Winkelabschnitt von zum Beispiel 100° des Querschnittsumfangs des Wellenstabs erstrecken, spricht man von einer dreiflügligen Schneckenwelle bzw. einem dreiflügligen Schneckenwellenabschnitt. Die Rotation und die translatorische Bewegung der Schneckenwelle in axialer Richtung werden so gesteuert, dass die einzelnen Flügelelemente mit ihren Flanken in die Nähe der entsprechenden Knetelemente gelangen, um das zu mischende und knetende Material zu verdichten und eine Scherwirkung auf dieses auszuüben, um so den Mischungs- und/oder Knetvorgang zu befördern, ohne dass die Knetelemente mit den Flügelelementen kollidieren. Abgesehen davon kommen die Knetelemente den Flanken der Flügelelemente so nahe, dass die Knetelemente Ablagerungen von Komponenten der Mischung auf den Flanken der Flügelelemente verhindert, so dass die Knetelemente im Ergebnis auch eine Reinigung der Flügelelemente bewirken. Natürlich muss die Anzahl und die Geometrie der Flügelelemente an die Anzahl der Knetelemente angepasst sein.

Zur Befestigung jedes der Knetelemente sind an der Innenumfangsfläche des Gehäuses solcher Misch- und Knetmaschinen Aufnahmen üblicherweise in der Form von Bohrungen vorgesehen, welche sich von der Innenumfangsfläche des Gehäuses in die Gehäusewand hinein oder gar hindurch erstrecken. Jedes Knetelement weist einen zu diesen Bohrungen passenden Fixierabschnitt auf, so dass die Knetelemente in die Aufnahmen eingeführt und dort befestigt werden können, wobei die Knetelemente mit ihrem radial innen liegenden Ende, welcher im Folgenden auch Knetabschnitt genannt wird, in den hohlzylindrischen Innenraum hineinragen. Beispielsweise kann jedes Knetelement so ausgestaltet sein, dass es sich durch die Bohrung und die gesamte Gehäusewand hindurch erstreckt. Zur Fixierung kann jedes Knetelement an seinem aus der Gehäusewand nach außen ragendem Ende ein Außengewinde aufweisen, auf das zur Fixierung des Knetelements eine Mutter aufgeschraubt wird.

Aus dem Stand der Technik sind Knetelemente bekannt, die vollständig aus einem härtbaren Material hergestellt sind und anschließend einer Wärmebehandlung unterzogen werden, um die gewünschten Werkstoffeigenschaften hinsichtlich Härte bzw. Verschleißbeständigkeit und Zähigkeit zu erzielen. Diese Knetelemente sind jedoch nur dafür geeignet, kurz ausgebildet und in die Gehäusewand eingepresst zu werden. Sofern die Knetelemente länger sind und sich beispielsweise durch die Gehäusewand hindurch erstrecken, um außerhalb der Gehäusewand mit einer Mutter befestigt zu werden, können keine vollständig aus einem härtbaren Material hergestellten Knetelemente eingesetzt, werden, da deren Bruchgefahr insbesondere im Bereich deren Gewinde zu hoch ist. Um diese Problematik zu umgehen, sind oberflächengehärtete Knetelemente vorgeschlagen worden, wie nitrierte Knetelemente oder mit verschleißfesten Beschichtungen versehene Knetelemente. Allerdings weisen solche Knetelemente den Nachteil auf, dass deren Verschleiß drastisch zunimmt, wenn die Oberflächenbeschichtung durch die während deren Betriebs herrschenden Beanspruchungen abgetragen worden ist, so dass die Knetelemente dann innerhalb sehr kurzer Zeit ausgetauscht werden müssen.

Es ist auch schon vorgeschlagen worden, den vorderen in den hohlzylindrischen Innenraum des Gehäuses bzw. den Prozessraum hineinragenden Knetabschnitt eines Knetelements aus einem pulvermetallurgischen Stahl zu formen und dessen hinteren mit einem Außengewinde versehenen Fixierabschnitt aus einem zähen hochfesten Stahl vorzusehen. Zur Herstellung des Knetelements werden die beiden Teile dann mittels heißisostatischem Pressen (HIP) miteinander verbunden. Bei dem heißisostatischem Pressen werden die eingesetzten pulverförmigen Ausgangsstoffe des Knetabschnitts heiß gepresst, wodurch der Knetabschnitt verdichtet und gleichzeitig mit dem Fixierabschnitt verbunden wird. Der Fixierabschnitt wird in dem HIP-Prozess als massives Stahlteil eingesetzt. Das durch heißisostatischem Pressen hergestellte Rohknetelement muss dann anschließend mechanisch zu der gewünschten Form bearbeitet und wärmebehandelt werden. Zwar weisen die so hergestellten Knetelemente nicht mehr die Nachteile der oberflächenbeschichteten Knetelemente auf; allerdings ist dieses Herstellungsverfahren sehr teuer und auch sehr aufwendig.

Ausgehend davon liegt der vorliegenden Erfindung daher Aufgabe zugrunde, ein Knetelement bereitzustellen, welches für eine Misch- und Knetmaschine insbesondere für kontinuierliche Aufbereitungsprozesse geeignet ist und sich durch eine sehr lange Betriebsdauer auszeichnet und welches einfach und kostengünstig hergestellt werden kann.

Erfindungsgemäß wird diese Aufgabe gelöst durch ein Knetelement für eine Misch- und Knetmaschine insbesondere für kontinuierliche Aufbereitungsprozesse, wobei das Knetelement einen stirnseitigen Knetabschnitt zum Kontaktieren der zu mischenden und knetenden Mischung sowie einen mit dem stirnseitigen Knetabschnitt verbundenen Fixierabschnitt zum Fixieren des Knetelements in der Misch- und Knetmaschine umfasst, wobei der stirnseitige Knetabschnitt aus einem Stahl, einer Legierung oder einem Hartstoff gebildet ist, und, wobei der Fixierabschnitt durch ein additives Fertigungsverfahren erzeugt und mit dem stirnseitigen Knetabschnitt des Knetelements verbunden ist.

Bei dem erfindungsgemäß zur Herstellung des Fixierabschnitts und Verbindung desselben mit dem Knetabschnitt des Knetelements eingesetzten additiven Fertigungsverfahren kommt es zu keiner Verformung oder anderweitigen Beeinträchtigung des stirnseitigen Knetabschnitts des Knetelements mehr. Mithin kann der stirnseitige Knetabschnitt des Knetelements bereits fertig geformt und, wenn aus Werkzeugstahl oder pulvermetallurgischem Stahl hergestellt, gehärtet bereitgestellt werden, bevor der Fixierabschnitt durch das additive Fertigungsverfahren erzeugt und mit dem Knetabschnitt verbunden wird. Beispielsweise wird bei dem selektiven Laserschweißen (SLM), welches ein bevorzugtes Beispiel für ein gemäß der vorliegenden Erfindung geeignetes additives Fertigungsverfahren ist, auf die Verbindungsfläche des Knetabschnitts üblicherweise in einem entsprechend der gewünschten Endform programmierten 3D-Drucker eine dünne, etwa 15 bis 500 µm dicke Schicht aus Pulver, wie beispielsweise Stahlpulver, aufgebracht, bevor das Pulver durch einen Laserstrahl lokal vollständig aufgeschmolzen und dann erstarren gelassen wird. Danach wird das Bauteil um den Betrag der Schichtdicke abgesenkt und erneut Pulver aufgetragen, geschmolzen und erstarren gelassen. Diese Schritte werden so oft wiederholt, bis der Fixierabschnitt fertiggestellt ist. Es muss dann allenfalls der Fixierabschnitt mechanisch nachgearbeitet werden, zum Beispiel indem an dessen dem Knetabschnitt abgewandten Ende beispielsweise durch Drehen das Außengewinde angebracht oder nachbearbeitet wird. Mithin ist das erfindungsgemäß eingesetzte Herstellungsverfahren nicht nur schneller sowie wesentlich weniger aufwendig als das aus dem Stand der Technik bekannte, auf heißisostatischem Pressen beruhende Verfahren, sondern vor allem auch wesentlich kostengünstiger. Die Herstellungskosten des erfindungsgemäß eingesetzten Verfahrens betragen nämlich nur etwa 50% der Kosten des aus dem Stand der Technik bekannten, auf heißisostatischem Pressen beruhenden Verfahrens. Da sich der stirnseitige Knetabschnitt aus einem Stahl, einer Legierung oder einem Hartstoff und insbesondere bevorzugt aus gehärtetem Werkzeugstahl, pulvermetallurgischem Stahl oder Hartstoff durch eine sehr hohe Härte und Biegefestigkeit auszeichnet und der Fixierabschnitt durch eine sehr hohe Zugfestigkeit, eignet sich das erfindungsgemäße Knetelement hervorragend als Knetelement für eine Misch- und Knetmaschine insbesondere für kontinuierliche Aufbereitungsprozesse und zeichnet sich dabei durch eine sehr lange Betriebsdauer aus.

Aufgrund der unterschiedlichen Herstellungsweise unterscheiden sich die aus dem Stand der Technik bekannten, durch heißisostatisches Pressen hergestellten Knetelemente von den erfindungsgemäßen, durch ein additives Fertigungsverfahren hergestellten Knetelemente strukturell. Während die Grenzfläche der aus dem Stand der Technik bekannten, durch heißisostatisches Pressen hergestellten Knetelemente, in welcher aufgrund von Diffusion während dem heißisostatischen Pressen Material aus den beiden durch heißisostatisches Pressen verbundenen Bauteilen enthalten ist, nur 0,02 bis 0,05 mm beträgt, ist diese Grenzfläche bei den erfindungsgemäßen Knetelemente breiter und beträgt mehr als 0,1 mm.

Unter Hartstoff wird im Sinne der vorliegenden Erfindung ein Werkstoff verstanden, der eine gemäß der DIN ISO 6508 gemessene Härte von mindestens 50 HRC und/oder eine gemäß der DIN EN ISO 7438 gemessene Biegefestigkeit von mindestens 4.000 MPa sowie eine Bruchdehnung von mindestens 3% aufweist. Stahl und Legierungen sind von dieser Definition explizit ausgenommen, selbst wenn diese die vorgenannten Eigenschaften aufweisen, um einfach sprachlich zwischen Stahl, Legierung und Hartstoff für den Knetabschnitt unterscheiden zu können.

Vorzugsweise wird der stirnseitige Knetabschnitt des erfindungsgemäßen Knetelements aus einem Material gebildet, welches aus der Gruppe ausgewählt ist, welche aus gehärtetem Werkzeugstahl, pulvermetallurgischem Stahl, ungehärtetem Stahl, rostfreiem Stahl, einer Cobalt-Legierung, einer Nickel-Legierung oder Hartstoff sowie beliebigen Kombinationen von zwei oder mehr der vorgenannten Materialien besteht.

Besonders gute Ergebnisse werden erhalten, wenn das in der vorliegenden Erfindung eingesetzte additive Fertigungsverfahren aus der Gruppe ausgewählt ist, welche besteht aus:
1. Pulverbettverfahren, auch als *"powder bed fusion", "selektives Laserschweißen"* oder Selective Laser Melting (SLM) bezeichnet,
2. Pulverdruckverfahren,
3. Laserauftragsschweißen, auch als *"direct energy deposition"* (DEP) oder *"lasermetal deposition"* (LMD) bezeichnet,
4. Laserauftragsschweißen mit Draht und
5. Elektronenstrahl-Pulverbettverfahren, auch als *"electron beam melting"* (EBM) bezeichnet.

Bei dem Pulverbettverfahren bzw. selektivem Laserschweißen werden Werkstoffe, wie Stahl, in Pulverform durch einen hochenergetischen Faserlaser lokal aufgeschmolzen. Während des Laserprozesses wird das Metallpulver vollständig aufgeschmolzen, bevor sich das Material nach dem Erstarren verfestigt. Bei dem Pulverdruckverfahren wird pulverförmiger Werkstoff beispielsweise mit einem Rakel über die gesamte Druckfläche verteilt, wonach gemäß den Querschnittsdaten des zu druckenden Modells ein Bindemittel das Pulver an den gewünschten Stellen verfestigt. Sobald eine Schicht fertig ist, wird die Druckplatte abgesenkt und eine weitere Schicht erstellt. Das Laserauftragschweißen wiederum ist ein generatives Fertigungsverfahren für Metalle, bei dem ein Laser auf der Bauteiloberfläche ein Schmelzbad erzeugt. Durch eine Düse wird automatisiert Metallpulver eingebracht und es entstehen miteinander verschweißte Raupen, die Strukturen an bestehenden Grundkörpern oder ganzen Bauteilen ergeben. Im Unterschied dazu wird bei dem Laserauftragsschweißen mit Draht, wie der Name sagt, anstelle von Pulver ein Metalldraht eingesetzt. Schließlich wird bei dem Elektronenstrahl-Pulverbettverfahren - im Unterschied zu dem vorstehend genannten selektiven Laserschweißen - anstelle eines Laserstrahls ein Elektronenstrahl eingesetzt, um schichtweise Pulver aufzuschmelzen, bevor er erstarren gelassen wird.

Gemäß einer besonders bevorzugten Ausführungsform der vorliegenden Erfindung ist das Knetelement durch ein Pulverbettverfahren bzw. selektives Laserschweißen als additives Fertigungsverfahren erhältlich, wobei das Verfahren die folgenden Schritte umfasst:
i) Bereitstellen des stirnseitigen Knetabschnitts aus einem Stahl, einer Legierung oder einem Hartstoff,
ii) Aufbringen einer Pulverschicht aus Metall oder einer Legierung auf ein Ende des in dem Schritt a) bereitgestellten stirnseitigen Knetabschnitts, Schmelzen der Pulverschicht mit einem Laser und Erstarren lassen der Schmelze zu einer festen Materialschicht,
iii) Aufbringen einer Pulverschicht aus Metall oder einer Legierung auf die in dem Schritt ii) gebildete feste Materialschicht, Schmelzen der Pulverschicht mit einem Laser und Erstarren lassen der Schmelze zu einer festen Materialschicht sowie
iv) Wiederholen der Schritte iii) bis der Fixierabschnitt die gewünschte Form aufweist.

Vorzugsweise wird der Schritt i) durchgeführt, indem der stirnseitigen Knetabschnitt geformt und dann, zumindest wenn der Knetabschnitt aus Stahl, wie insbesondere ungehärtetem Stahl oder pulvermetallurgischem Stahl, zusammengesetzt ist, durch eine Wärmebehandlung gehärtet wird. Dabei wird die Härtung vorzugsweise bei einer Temperatur von mindestens 900°C, weiter bevorzugt von mindestens 950°C, besonders bevorzugt von mindestens 1.000°C und ganz besonders bevorzugt zwischen 1.000 und 1.150°C durchgeführt. Dabei ist es bevorzugt, dass außer der Härtung durch Wärmebehandlung keine weitere Härtung stattfindet, also insbesondere keine Carburierung, Nitrocarburierung oder Oberflächenbeschichtung. Wenn der stirnseitigen Knetabschnitt aus einem Hartstoff oder einem Hartstoffgemisch (wie Diamant, Korund, Keramik, Karbid, Nitrid oder Oxid) hergestellt ist, der bzw. das in eine Binder-Matrix (wie Cobalt, Nickel oder Eisen) eingebettet ist und gesintert wurde, ist eine Härtung nicht erforderlich. Man spricht dann auch von Hartmetallen.

Mithin ist es besonders bevorzugt, dass das Knetelement durch ein Verfahren erhältlich ist, welches die folgenden Schritte umfasst:
a) Formen des stirnseitigen Knetabschnitts aus einem Stahl, einer Legierung oder einem Hartstoff, bevorzugt aus gehärtetem Werkzeugstahl, pulvermetallurgischem Stahl, ungehärtetem Stahl, rostfreiem Stahl, einer Cobalt-Legierung, einer Nickel-Legierung oder Hartmetall,
b) Härten des in dem Schritt a) geformten stirnseitigen Knetabschnitts durch Wärmebehandlung bei einer Temperatur von mindestens 900°C, wenn in dem Schritt a) ein Stahl, wie pulvermetallurgischer Stahl, eingesetzt wurde,
c) Ausbilden des Fixierabschnittes durch ein additives Fertigungsverfahren.

Auch bei dieser Ausführungsform ist das additive Fertigungsverfahren bevorzugt aus der Gruppe ausgewählt, welche aus Pulverbettverfahren, Pulverdruckverfahren, Laserauftragsschweißen, Laserauftragsschweißen mit Draht, Elektronenstrahl-Pulverbettverfahren und beliebigen Kombinationen von zwei oder mehr der vorgenannten Verfahren ausgewählt ist.

Sofern als additives Fertigungsverfahren ein Pulverbettverfahren bzw. selektives Laserschweißen eingesetzt wird, umfasst das Verfahren der vorgenannten Ausführungsform nach dem Schritt b) vorzugsweise die folgenden Schritte:
c) Aufbringen einer Pulverschicht aus Metall oder einer Legierung auf ein Ende des in dem Schritt a) gehärteten stirnseitigen Knetabschnitts und
d) Schmelzen der Pulverschicht mit einem Laser,
e) Erstarren der Schmelze zu einer festen Materialschicht,
f) Aufbringen einer Pulverschicht aus Metall oder einer Legierung auf die in dem Schritt e) gebildete feste Materialschicht,
g) Schmelzen der Pulverschicht mit einem Laser,
h) Erstarren der Schmelze zu einer festen Materialschicht und
i) Wiederholen der Schritte f) bis h) bis der Fixierabschnitt die gewünschte Form aufweist.

Um eine hohe Betriebsdauer des erfindungsgemäßen Knetelements in einer Misch- und Knetmaschine der eingangs beschriebenen Art zu gewährleisten, wird es in Weiterbildung des Erfindungsgedankens vorgeschlagen, dass der stirnseitige Knetabschnitt aus einem gehärteten Werkzeugstahl nach DIN EN ISO 4957 und vorzugsweise aus einem gehärteten pulvermetallurgischem Stahl besonders bevorzugt ausgewählt aus der Gruppe bestehend aus CPM3V, CPM9V, CPM10V, CPMRexT15, M390, S390, ASP60, ASP2052, ASP2052, TSP3W, TSP1, TSP23 und beliebigen Kombination von zwei oder mehr der vorgenannten pulvermetallurgischen Stähle gebildet ist. Derartige gehärtete Werkzeugstähle bzw. pulvermetallurgische Stähle zeichnen sich nicht nur durch eine hohe Härte, sondern gleichzeitig auch durch eine hohe Biegefestigkeit aus. Wie vorstehend dargelegt, ist es bevorzugt, dass der Stahl nur durch Wärmebehandlung gehärtet wurde, aber keiner weiteren Härtung, also insbesondere keiner Carburierung, Nitrocarburierung oder Oberflächenbeschichtung, unterzogen worden ist.

Bei der vorgenannten Ausführungsform ist es besonders bevorzugt, dass der stirnseitige Knetabschnitt des Knetelements aus einem Werkzeugstahl oder pulvermetallurgischen Stahl zusammengesetzt ist, welcher bei einer Temperatur von mindestens 900°C, weiter bevorzugt mindestens 950°C und ganz besonders bevorzugt zwischen 1.000 und 1.150°C gehärtet wurde.

In einer alternativen, bevorzugten Ausführungsform der vorliegenden Erfindung ist es vorgesehen, dass der stirnseitigen Knetabschnitt des erfindungsgemäßen Knetelements aus einem Hartmetall gebildet ist. Bei den Hartmetallen handelt es sich meist um Ausbildungen intermetallischer Phasen, in denen ein hoher Anteil metallischen Bindungscharakters besteht. Geeignete Beispiele für solche Hartstoff sind solche, die aus der Gruppe ausgewählt sind, welche aus Wolframcarbid, Siliciumcarbid, Borcarbid, Wolframcarbid, Vanadiumcarbid, Titancarbid, Tantalcarbid, Titannitrid, Siliciumnitrid, Bornitrid, Siliciumnitrid, Siliciumoxid und beliebigen Kombination von zwei oder mehr der vorgenannten Hartstoffen besteht.

Gute Ergebnisse werden insbesondere erzielt, wenn der stirnseitige Knetabschnitt des Knetelements eine gemäß der DIN EN ISO 6508 gemessene Härte von mindestens 45 Rockwell, bevorzugt von mindestens 50 Rockwell, besonders bevorzugt von mindestens 55 Rockwell und ganz besonders bevorzugt von mindestens 60 Rockwell aufweist.

Gleichermaßen ist es bevorzugt, dass der stirnseitige Knetabschnitt des Knetelements eine gemäß der DIN EN ISO 7438 gemessene Biegefestigkeit von mindestens 3.000 MPa, besonders bevorzugt von mindestens 3.500 MPa und ganz besonders bevorzugt von mindestens 4.000 MPa aufweist.

Des Weiteren ist es bevorzugt, dass die Bruchdehnung des stirnseitigen Knetabschnitts des Knetelements mindestens 2%, besonders bevorzugt mindestens 3% und ganz besonders bevorzugt mindestens 4% beträgt.

In Weiterbildung des Erfindungsgedankens wird es vorgeschlagen, dass der Fixierabschnitt des erfindungsgemäßen Knetelements aus einem nicht gehärteten Stahl gebildet ist und vorzugsweise aus einem Vergütungsstahl gemäß der DIN EN 20277. Solche Stähle weisen eine geeignete Zugfestigkeit auf.

Unabhängig von dem konkreten Material des Fixierabschnitts ist es bevorzugt, dass der Fixierabschnitt des Knetelements eine gemäß der DIN EN ISO 6892-1 bzw. DIN 50125 gemessene Zugfestigkeit von mindestens 800 MPa, besonders bevorzugt von mindestens 1.000 MPa und ganz besonders bevorzugt von mindestens 1.200 MPa aufweist.

Bezüglich der Form des Knetelements ist die vorliegende Erfindung nicht besonders beschränkt. Vielmehr eignet sich die vorliegende Erfindung für Knetelemente in jeglicher Form, sofern sie geeignet sind, in einer eingangs beschriebenen Misch- und Knetmaschine eingesetzt zu werden.

Beispielsweise kann der stirnseitige Knetabschnitt des Knetelements die Form eines Bolzens oder eines Kragenbolzens aufweist. Unter Bolzen wird im Rahmen der vorliegenden Erfindung ein zylindrisches Element verstanden, das im Verhältnis zu seinem Durchmesser vergleichsweise kurz ist und beispielsweise ein Verhältnis von Durchmesser zu Länge von mehr als 0,5:1 aufweist. Analog dazu wird unter einem Kragenbolzen ein Element verstanden, von dem einer seiner beiden Endabschnitte als Bolzen ausgestaltet ist und der andere Endabschnitt ebenfalls als Bolzen ausgestaltet ist, wobei jedoch der Abschnitt des Knetabschnitts, der bei dem Betrieb des Knetelements in einer Misch- und Knetmaschine in den Prozessraum hineinragt, bevorzugt einen kleineren Querschnitt aufweist als der andere Endabschnitt, der dazu vorgesehen ist, in die zur Aufnahme des Knetelements in der Gehäuseinnenwand der Misch- und Knetmaschine vorgesehene Bohrung eingesteckt zu werden.

Gemäß einer anderen bevorzugten Ausführungsform der vorliegenden Erfindung ist der Fixierabschnitt des Knetelements einstückig und - in Relation zu der Dicke der Gehäusewand - kurz ausgebildet und weist einen zylindrischen Abschnitt und einen damit verbundenen Gewindeabschnitt auf. Der Gewindeabschnitt kann ein Außen- oder Innengewinde umfassen und umfasst bevorzugt ein Innengewinde. Bei dieser Ausführungsform kann das Knetelement an seinem dem Knetabschnitt gegenüberliegenden Ende des Fixierabschnitts mit einem anderen Bauteil durch Verschrauben verbunden werden, wobei dieses weitere Bauteil sich durch die Gehäusewand hindurch erstrecken und außerhalb des Gehäuses mit einer Mutter fixiert werden kann. Das dem Knetabschnitt gegenüberliegende Ende des Fixierabschnitts kann insbesondere auch dreikantig, vierkantig, fünfkantig, sechskantig oder mehrkantig ausgebildet sein, um passgenau in das radial innen liegende Ende einer entsprechend ausgebildeten Aufnahme für das Knetelement in der Gehäusewand eingesteckt werden zu können.

Gemäß einer hierzu alternativen Ausführungsform ist der Fixierabschnitt des Knetelements einstückig und - in Relation zu der Dicke der Gehäusewand - lang ausgebildet und weist mindestens einen zylindrischen Abschnitt, wie beispielsweise genau einen zylindrischen Abschnitt, und einen damit verbundenen Gewindeabschnitt auf. Beispielsweise ist der zylindrische Abschnitt so lang, dass er sich durch die Gehäusewand hindurch erstreckt und der anschließende Gewindeabschnitt, der vorzugsweise ein Außengewinde aufweist, außerhalb der Gehäusewand der Misch- und Knetmaschine angeordnet ist. So kann der Fixierabschnitt des Knetelements einfach an dem Gehäuse der Misch- und Knetmaschine fixiert werden.

In Weiterbildung des Erfindungsgedankens wird es vorgeschlagen, dass der Fixierabschnitt des Knetelements einstückig und - in Relation zu der Dicke der Gehäusewand - lang ausgebildet ist und zwei oder mehr zylindrische Abschnitte mit sich unterscheidenden Durchmessern sowie einen mit einem der zylindrischen Abschnitte verbundenen Gewindeabschnitt aufweist. Diese Ausführungsform ist beispielsweise bevorzugt, wenn das Gehäuse der Misch- und Knetmaschine eine Gehäuseschale aufweist. Üblicherweise ist das Gehäuse einer der eingangs beschriebenen Misch- und Knetmaschine zweiteilig ausgestaltet, wobei die beiden Gehäusehälften über ein Scharnier miteinander verbunden sind und somit auf- und zusammengeklappt werden können. Da die Innenseite des Gehäuses bei dem Betrieb beansprucht wird, ist diese häufig mit einer Gehäuseschale ausgekleidet, die nach einer gewissen Betriebsdauer schnell, einfach und kostengünstig ausgetauscht werden kann. In diesem Fall wird der Prozessraum durch die Innenumfangsflächen der beiden Gehäuseschalen gebildet. Jede der Aufnahmen bzw. Bohrungen für die Knetelemente erstreckt sich in diesem Fall durch die Gehäuseschale und ggf. auch durch die radial außen liegende Gehäusewand. Die vorliegende Ausführungsform des Knetelements mit einem Fixierabschnitt, welcher zwei oder mehr zylindrische Abschnitte mit sich unterscheidenden Durchmessern aufweist, ermöglicht es, beispielsweise den dem Knetabschnitt des Knetelements benachbarten Abschnitt des Fixierabschnitts so auszugestalten, dass er sich passgenau in die Bohrung der Gehäuseschale einfügt, wohingegen der darüber liegende zylindrische Abschnitt des Fixierabschnitts, der in der in der Gehäusewand angeordneten Bohrung verläuft, beispielsweise zur Einsparung von Material einen kleinen Durchmesser aufweist. Bei dieser Ausführungsform ist es bevorzugt, dass der Gewindeabschnitt an dem dem stirnseitigen Knetabschnitt gegenüberliegenden Ende des Fixierabschnitts angeordnet ist, um mit einer Mutter an der Gehäuseaußenwand fixiert werden zu können.

Alternativ zu der vorgenannten Ausführungsform kann der Fixierabschnitt des Knetelements einstückig und - in Relation zu der Dicke der Gehäusewand - lang ausgebildet sein sowie einen dem Knetabschnitt zugewandten sowie vierkantig ausgestalteten Abschnitt, einen sich daran anschließenden zylindrischen Abschnitt sowie einen sich daran anschließenden Gewindeabschnitt aufweisen. Alternativ zu der vierkantigen Ausgestaltung des dem Knetabschnitt zugewandten Abschnitts kann dieser Abschnitt des Fixierabschnitts auch drei-, fünf-, sechs- oder mehrkantig ausgestaltet sein. Alternativ dazu kann dieser Abschnitt des Fixierabschnitts auch oval, elliptisch oder polygonal ausgestaltet sein. Durch diese Ausgestaltungen ist es möglich, das Knetelement verdrehsicher in das radial innere Ende einer Aufnahme einzuführen, wenn das radial innere Ende der Aufnahme entsprechend ausgestaltet ist.

Ein weiterer Gegenstand der vorliegenden Erfindung ist eine Misch- und Knetmaschine für kontinuierliche Aufbereitungsprozesse, wie zum Kneten und Mischen von partikulärem Ausgangsmaterial und/oder zur Herstellung von Granulat, Strangpressprofilen oder Formteilen, mit einem Gehäuse, in welchem ein von der Innenumfangsfläche des Gehäuses begrenzter und in der Längsrichtung der Misch- und Knetmaschine verlaufender hohler Innenraum ausgebildet ist, und mit einer sich zumindest abschnittsweise in axialer Richtung durch den Innenraum des Gehäuses erstreckenden Schneckenwelle, die bei dem Betrieb in dem Innenraum des Gehäuses rotiert und sich gleichzeitig in der axialen Richtung translatorisch hin- und her bewegt, wobei in dem Gehäuse mindestens fünf sich von der Innenumfangsfläche des Gehäuses in das Gehäuse zumindest abschnittsweise hinein erstreckende Aufnahmen für Knetelemente vorgesehen sind, wobei in wenigstens einer der Aufnahmen ein zuvor beschriebenes Knetelement angeordnet ist.

In Weiterbildung des Erfindungsgedankens wird es vorgeschlagen, dass die sich von der Innenumfangsfläche des Gehäuses in das Gehäuse zumindest abschnittsweise hinein erstreckenden Aufnahmen für Knetelemente in der Form von sich in der axialen Richtung der Misch- und Knetmaschine erstreckenden Reihen angeordnet sind, wobei zwischen jeweils zwei benachbarten Aufnahmen einer Reihe ein konstanter Abstand vorgesehen ist. Unter einer Reihe von Aufnahmen wird im Sinne der vorliegenden Erfindung verstanden, dass eine über die voneinander in axialer Richtung beabstandeten Aufnahmen einer gelegte Verbindungslinie eine Gerade ist. Vorzugsweise sind die Aufnahmen in 2 bis 11, weiter bevorzugt 2 bis 10, noch weiter bevorzugt 3 bis 9, besonders bevorzugt 4 bis 8, ganz besonders bevorzugt 5 bis 7 und höchst bevorzugt 6 sich in der axialen Richtung über zumindest einen Abschnitt der Innenumfangsfläche des Gehäuses erstreckende Reihen angeordnet. Dabei können die einzelnen Reihen von Knetelementen gleichmäßig oder ungleichmäßig über den Querschnittsumfang der Innenumfangsfläche des Gehäuses verteilt sein. Mit anderen Worten können die Reihen von Aufnahmen für die Knetelemente über den Querschnittsumfang der üblicherweise zylindrischen Innenumfangsfläche des Gehäuses der Misch- und Knetmaschine so verteilt sein, dass die Winkelabstände zwischen den Aufnahmen der verschiedenen, sich in axialer Richtung erstreckenden Reihen auf dem kreisrunden Querschnittsumfang der zylindrischen Innenumfangsfläche des Gehäuses jeweils gleich sind. Alternativ dazu können sich die Winkelabstände zwischen zumindest zwei der Aufnahmen der verschiedenen, sich in axialer Richtung erstreckenden Reihen auf dem kreisrunden Querschnittsumfang der zylindrischen Innenumfangsfläche des Gehäuses ungleich sein.

Gemäß einer weiteren bevorzugten Ausführungsform der vorliegenden Erfindung ist in wenigstens 10% der Aufnahmen, weiter bevorzugt in wenigstens 25% und besonders bevorzugt in wenigstens 50% der Aufnahmen jeweils ein zuvor beschriebenes erfindungsgemäßes Knetelement angeordnet.

Alternativ dazu ist es, auch wenn dies weniger bevorzugt ist, möglich, dass ein Teil der Aufnahmen jeweils mit einem erfindungsgemäßen Knetelement bestückt ist, wohingegen ein anderer Teil der Aufnahmen jeweils mit einem herkömmlichen Knetelement bestückt und/oder gar nicht mit einem Knetelement bestückt ist.

Vorzugsweise ist wenigstens eine der Aufnahmen eine Aussparung, Vertiefung oder Bohrung und sind bevorzugt jede der Aufnahmen eine Aussparung, Vertiefung oder Bohrung. Im Fall eines typischen zweikomponentigen Aufbaus des Gehäuses aus einem Außengehäuse und radial innen daran angeordneter Gehäuseschale erstreckt sich die Aufnahme von der Innenumfangsfläche der Gehäuseschale in diese und ggf. auch in das Außengehäuse hinein und ggf. durch das Außengehäuse hindurch. Im Fall eines einkomponentigen Aufbaus des Gehäuses erstreckt sich die Aufnahme von der Innenumfangsfläche des Gehäuses in dieses hinein und ggf. durch dieses hindurch.

Zudem ist es bevorzugt, dass jede der Aufnahmen eine sich durch die Gehäusewand hindurch erstreckende Bohrung ist.

Gemäß einer weiteren bevorzugten Ausführungsform der vorliegenden Erfindung umfasst die Schneckenwelle einen Wellenstab, auf dessen Umfangsfläche mindestens zwei sich von dem Wellenstab radial nach außen in Richtung der Innenumfangsfläche des Gehäuses erstreckende Flügelelemente angeordnet sind. Die Flügelelemente sind so ausgestaltet und voneinander so beabstandet, dass bei dem Betrieb der Misch- und Knetmaschine, d.h. bei der rotierenden und sich translatorisch axial vor- und zurückbewegenden Schneckenwelle, die einzelnen Flügelelemente in die Nähe der entsprechenden Knetelemente gelangen, um das zu mischende und knetende Material zu verdichten und eine Scherwirkung auf dieses auszuüben, um so den Mischungs- und/oder Knetvorgang zu befördern, ohne dass die Knetelemente mit den Flügelelementen kollidieren. Dabei können einzelne Schneckenwellenabschnitte zweiflüglig, dreiflügig oder auch vierflügig ausgestaltet sein. Unter einem zweiflügligen Schneckenwellenabschnitt wird ein axialer Abschnitt der Schneckenwelle verstanden, der, im Querschnitt des Wellenstabs gesehen, zwei Flügelelemente umfasst, welche sich jeweils über einen Winkelabschnitt von zum Beispiel 140° des Querschnittsumfangs des Wellenstabs erstrecken. Analog dazu spricht man von einem dreiflügligen Schneckenwellenabschnitt, wenn der Abschnitt, im Querschnitt des Wellenstabs gesehen, drei Flügelelemente umfasst bzw. von einem vierflügligen Schneckenwellenabschnitt, wenn der Abschnitt, im Querschnitt des Wellenstabs gesehen, vier Flügelelemente umfasst.

Ein weiterer Gegenstand der vorliegenden Erfindung ist ein Verfahren zum Herstellen eines zuvor beschriebenen Knetelements, welches die nachfolgenden Schritte umfasst:
a) Formen des stirnseitigen Knetabschnitts aus einem Stahl, einer Legierung oder einem Hartstoff, bevorzugt aus gehärtetem Werkzeugstahl, pulvermetallurgischem Stahl, ungehärtetem Stahl, rostfreiem Stahl, einer Cobalt-Legierung, einer Nickel-Legierung oder Hartmetall,
b) Härten des in dem Schritt a) geformten stirnseitigen Knetabschnitts durch Wärmebehandlung bei einer Temperatur von mindestens 900°C, wenn in dem Schritt a) ein Stahl, wie pulvermetallurgischer Stahl, eingesetzt wurde,
c) Ausbilden des Fixierabschnittes durch ein additives Fertigungsverfahren.

Auch bei dieser Ausführungsform ist das additive Fertigungsverfahren bevorzugt aus der Gruppe ausgewählt, welche aus Pulverbettverfahren, Pulverdruckverfahren, Laserauftragsschweißen, Laserauftragsschweißen mit Draht, Elektronenstrahl-Pulverbettverfahren und beliebigen Kombinationen von zwei oder mehr der vorgenannten Verfahren ausgewählt ist.

Sofern als additives Fertigungsverfahren ein Pulverbettverfahren bzw. selektives Laserschweißen eingesetzt wird, umfasst das Verfahren der vorgenannten Ausführungsform nach dem Schritt b) vorzugsweise die folgenden Schritte:
c) Aufbringen einer Pulverschicht aus Metall oder einer Legierung auf ein Ende des in dem Schritt a) gehärteten stirnseitigen Knetabschnitts und
d) Schmelzen der Pulverschicht mit einem Laser,
e) Erstarren der Schmelze zu einer festen Materialschicht,
f) Aufbringen einer Pulverschicht aus Metall oder einer Legierung auf die in dem Schritt e) gebildete feste Materialschicht,
g) Schmelzen der Pulverschicht mit einem Laser,
h) Erstarren der Schmelze zu einer festen Materialschicht und
i) Wiederholen der Schritte f) bis h) bis der Fixierabschnitt die gewünschte Form aufweist.

Die zuvor zur Herstellung des erfindungsgemäßen Knetelements beschriebenen bevorzugten Merkmale sind auch für das erfindungsgemäße Verfahren bevorzugt.

In den Schritten c) und d) werden vorzugsweise Pulverschichten mit einer Schichtdicke von 15 bis 500 µm aufgebracht.

Das Verfahren kann in jedem handelsüblichen 3D-Durcker durchgeführt werden, wie beispielsweise einem von SLM, Trumpf, Renishaw, Concept Laser oder EOS.

Nachfolgend wird die vorliegende Erfindung unter Bezug auf die Zeichnung näher beschrieben, in der:
- Fig. 1a: einen schematischen Längsschnitt einer Misch- und Knetmaschine gemäß einem Ausführungsbeispiel der vorliegenden Erfindung zeigt.
- Fig. 1b: eine perspektivische Ansicht des Gehäuses der in der Fig. 1a gezeigten Misch- und Knetmaschine zeigt.
- Fig. 1c: einen Querschnitt einer der beiden Gehäusehälften der in der Fig. 1a gezeigten Misch- und Knetmaschine zeigt, welche mit einem Knetelement gemäß einem Ausführungsbeispiel der vorliegenden Erfindung bestückt ist.
- Fig. 2a: eine perspektivische Ansicht eines Knetelement gemäß einem anderen Ausführungsbeispiel der vorliegenden Erfindung zeigt.
- Fig. 2b: eine schematische Ansicht des in der Figur 2a gezeigten Knetelements eingesetzt in einer Aufnahme einer Gehäuseschale zeigt.
- Fig. 3a: eine perspektivische Ansicht eines Knetelement gemäß einem anderen Ausführungsbeispiel der vorliegenden Erfindung zeigt.
- Fig. 3b: eine schematische Ansicht des in der Figur 3a gezeigten Knetelements eingesetzt in einer Aufnahme einer Gehäuseschale zeigt.

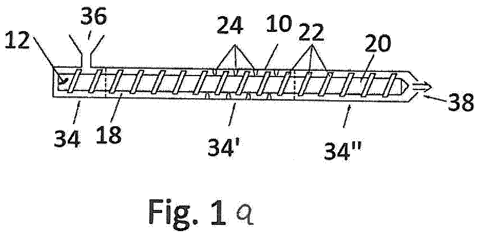

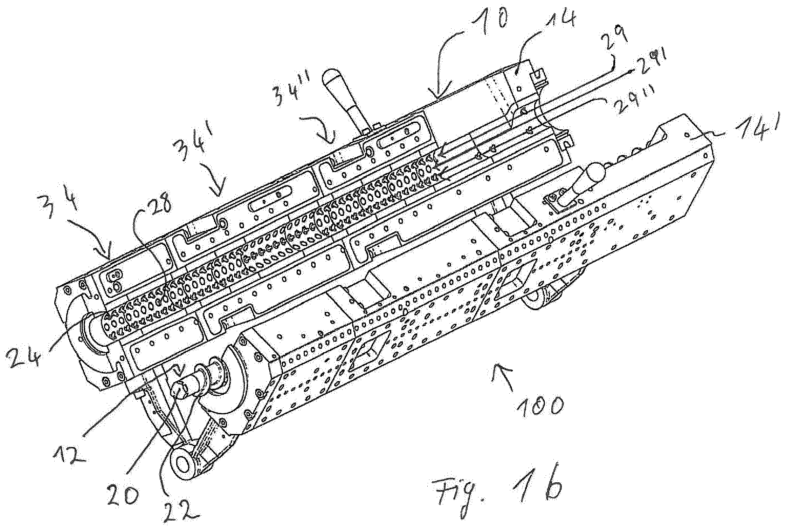

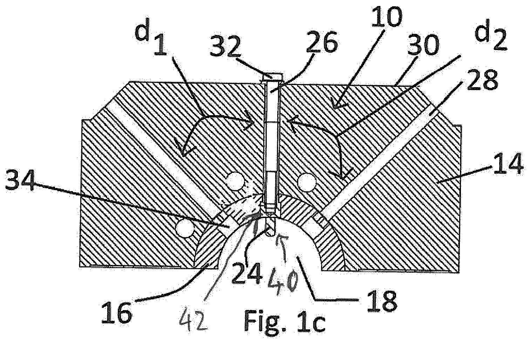

Die in den Figuren 1a, 1b und 1c in verschiedenen Ansichten schematisch gezeigte und im Ganzen mit 100 bezeichnete Misch- und Knetmaschine umfasst ein Gehäuse 10 und eine in dem Gehäuse 10 angeordnete Schneckenwelle 12. Das Gehäuse 10 umfasst zwei Gehäusehälften 14, 14', die innen mit einer sogenannten Gehäuseschale 16 ausgekleidet sind. Dabei wird die Gehäuseschale 16 in der vorliegenden Patentanmeldung als Bestandteil des Gehäuses 10 betrachtet. Die Innenumfangsfläche des Gehäuses 10 begrenzt, wenn die beiden Gehäusehälften 14, 14' geschlossen sind, einen zylindrischen hohlen Innenraum 18, also einen Innenraum 18 mit kreisförmigem Querschnitt.

Die Schneckenwelle 12 umfasst einen Wellenstab 20, auf dessen Umfangsfläche Flügelelemente 22 angeordnet sind, welche sich auf der Umfangsfläche des Wellenstabes 20 radial nach außen erstrecken, wobei die einzelnen Flügelelemente 22 voneinander beabstandet sind. In den beiden Gehäusehälften 14, 14' sind Aufnahmen 28 für Knetelemente 24, also für Knetbolzen, Knetzähne und dergleichen, vorgesehen. Dabei ist jede der Aufnahmen 28, wie in der Fig. 1c gezeigt, eine Bohrung 28, welche sich von der Innenumfangsfläche der Gehäuseschale 16 durch die Gehäusewand hindurch erstreckt. Das untere, radial innen liegende Ende jeder Aufnahme 28 ist im Querschnitt vierkantig ausgestaltet. Jedes Knetelement 24 weist an seinem unteren Ende ein passgenau in das vierkantig ausgestaltete radial innere Ende der Aufnahmen 28 passendes Ende auf und ist dadurch im eingesetzten Zustand verdrehsicher in der Aufnahme 28 fixiert. In Abweichung von der konkret in der Fig. 1c dargestellten Ausführungsform kann das untere, radial innen liegende Ende jeder Aufnahme 28 im Querschnitt auch drei- oder sechskantig oder zylindrisch ausgestaltet sein. Das Knetelement 24 ist an seinem in der Aufnahme 28 liegenden Ende mit einem in dem darüberliegenden Ende der Aufnahme 28 eingesetzten Fixierelement 26 durch Verschrauben verbunden. Dadurch werden die einzelnen Knetelements 24 von jeweils einem Fixierelement 26 gehalten, das an seinem dem Knetelement 24 gegenüberliegenden Ende einen Außengewindeabschnitt aufweist, welcher über die Außenwand 30 des Gehäuses 10 hinaussteht, wo eine Mutter 32 aufschraubbar ist, um das Fixierelement 26 in dem Gehäuse 10 und damit auch das Knetelement 24 zu fixieren. Alternativ kann das Knetelement 24 auch ein Innengewinde für eine Schraube aufweisen und anstelle über das Fixierelement 26 und der Mutter 32 mit einer Schraube fixiert sein.

Wie insbesondere aus der Figur 1b hervorgeht, erstrecken sich die voneinander jeweils gleich beabstandeten Aufnahmen 28 für die Knetelemente 24 in jeder der beiden Gehäusehälften 14, 14', in der axialen Richtung gesehen, in Form von drei Reihen 29, 29', 29". Somit beträgt die Gesamtzahl der Reihen von Aufnahmen 29, 29', 29" des Gehäuses sechs. Unter Reihe wird im Sinne der vorliegenden Erfindung verstanden, dass eine über die voneinander in axialer Richtung beabstandeten Aufnahmen 28 einer Reihe 29, 29', 29" gelegte Verbindungslinie eine Gerade ist. Wie in den Figuren 1a und 1b gezeigt, ist die Misch- und Knetmaschine 100 in axialer Richtung in mehrere Verfahrensabschnitte 34, 34', 34" unterteilt, wobei jeder Verfahrensabschnitt 34, 34', 34" hinsichtlich der Anzahl an Knetelementen 24 sowie der Anzahl und der Ausdehnung der Flügelelemente 22 auf dem Wellenstab 20 an die Funktion der einzelnen Verfahrensabschnitte 34, 34', 34" angepasst ist. Wie in der Figur 1b dargestellt, sind in dem linken Abschnitt 34 und in dem rechten Abschnitt 34" der Gehäusehälfte 14 von den drei Reihen 29, 29', 29" von Aufnahmen 28 für Knetelemente 24 zwei Reihen, nämlich die obere Reihe 29 und die untere Reihe 29", mit Knetelementen 24 bestückt, wohingegen die mittlere Reihe 29' nicht mit Knetelementen 24 bestückt ist. Im Unterschied dazu ist in dem mittleren Abschnitt 34' der Gehäusehälfte 14 von den drei Reihen 29, 29', 29" von Aufnahmen 28 für Knetelements 24 eine Reihe, nämlich die mittlere Reihe 29', mit Knetelementen 24 bestückt, wohingegen die obere Reihe 29 und die untere Reihe 29" nicht mit Knetelementen 24 bestückt ist. Auch in dem mittleren Abschnitt 34' der unteren Gehäusehälfte 14' ist lediglich die mittlere Reihe mit Knetelementen bestückt, so dass der mittlere Abschnitt 34' des Gehäuses 10 insgesamt zwei Reihen von sich gegenüberliegenden Knetelementen 24 aufweist, d.h. der Winkel zwischen den beiden Reihen von Knetelementen 24 auf der Innenumfangsfläche des Gehäuses 10 beträgt 180°. Das zu mischende Ausgangsmaterial wird der Misch- und Knetmaschine 100 über die als Einfülltrichter ausgestaltete Einfüllvorrichtung 36 zugeführt, dann durch die Verfahrensabschnitte 34, 34', 34" geführt und schließlich über die Austrittsöffnung 37 abgeführt. Anstelle der dargestellten Verfahrensabschnitte 34, 34', 34" kann die erfindungsgemäße Misch- und Knetmaschine 100 auch mehr Verfahrensabschnitte, wie insbesondere auch vier Verfahrensabschnitte, oder weniger Verfahrensabschnitte, wie zwei oder einen Verfahrensabschnitt, aufweisen.

Erfindungsgemäß umfasst das Knetelement 24 einen stirnseitigen Knetabschnitt 40 zum Kontaktieren der zu mischenden und knetenden Mischung, welcher bei dem Betrieb der Misch- und Knetmaschine 100 in den durch das Gehäuse 10 begrenzten Innenraum 18 hineinragt, sowie einen mit dem stirnseitigen Knetabschnitt 40 verbundenen Fixierabschnitt 42 zum Fixieren des Knetelements 24 in einer in der Gehäuseschale 16 und der Gehäusewand 30 angeordneten Aufnahme 28 der Misch- und Knetmaschine 100, wobei der stirnseitige Knetabschnitt 40 aus einem Stahl, einer Legierung oder einem Hartstoff, wie bevorzugt aus gehärtetem Werkzeugstahl, pulvermetallurgischem Stahl, ungehärtetem Stahl, rostfreiem Stahl, einer Cobalt-Legierung, einer Nickel-Legierung oder Hartmetall, gebildet ist und der Fixierabschnitt 42 durch ein additives Fertigungsverfahren, wie beispielsweise durch selektives Laserschmelzen, erzeugt und mit dem stirnseitigen Knetabschnitt 40 des Knetelements 24 verbunden ist.

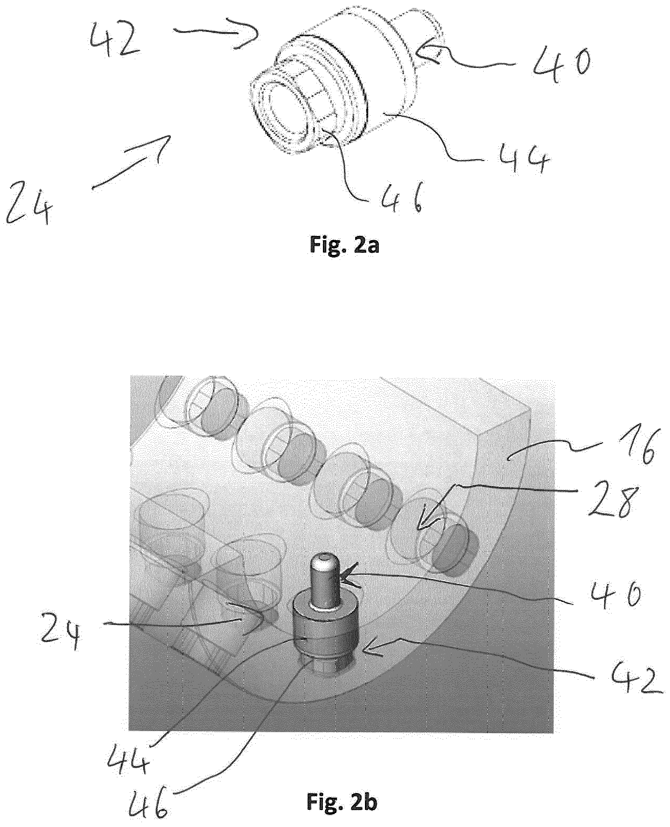

Das in den Figuren 2a und 2b gezeigte Knetelement ist ähnlich zu dem in der Figur 1c gezeigtem und umfasst einen stirnseitige Knetabschnitt 40 aus einem Stahl, einer Legierung oder einem Hartstoff, wie bevorzugt aus gehärtetem Werkzeugstahl, pulvermetallurgischem Stahl, ungehärtetem Stahl, rostfreiem Stahl, einer Cobalt-Legierung, einer Nickel-Legierung oder Hartmetall, und einen Fixierabschnitt 42, wobei der Fixierabschnitt 42 durch ein additives Fertigungsverfahren, wie beispielsweise selektives Laserschmelzen, erzeugt und mit dem stirnseitigen Knetabschnitt 40 des Knetelements 24 verbunden ist. Dabei ist der Fixierabschnitt 42 des Knetelements 24 - in Relation zu der Dicke der Gehäusewand - kurz ausgebildet und weist einen zylindrischen Abschnitt 44 und einen damit verbundenen Gewindeabschnitt 46 auf. Der Gewindeabschnitt 46 umfasst ein Innengewinde, mit dem das Knetelement 24 durch Verschrauben mit einem in der Figur 1c gezeigten Fixierelement 26, welches sich durch die Gehäusewand hindurch erstreckt und außerhalb des Gehäuses mit einer Mutter 32 fixiert werden kann, verbunden werden kann. Das dem Knetabschnitt 40 gegenüberliegende Ende des Fixierabschnitts 42 ist dabei mehrkantig ausgebildet, um passgenau in eine entsprechend geformte Aufnahme 28 für das Knetelement in der Gehäuseschale 16 eingesteckt werden zu können, wohingegen der Knetabschnitt des Knetelements 24 als Kragenbolzen ausgestaltet ist.

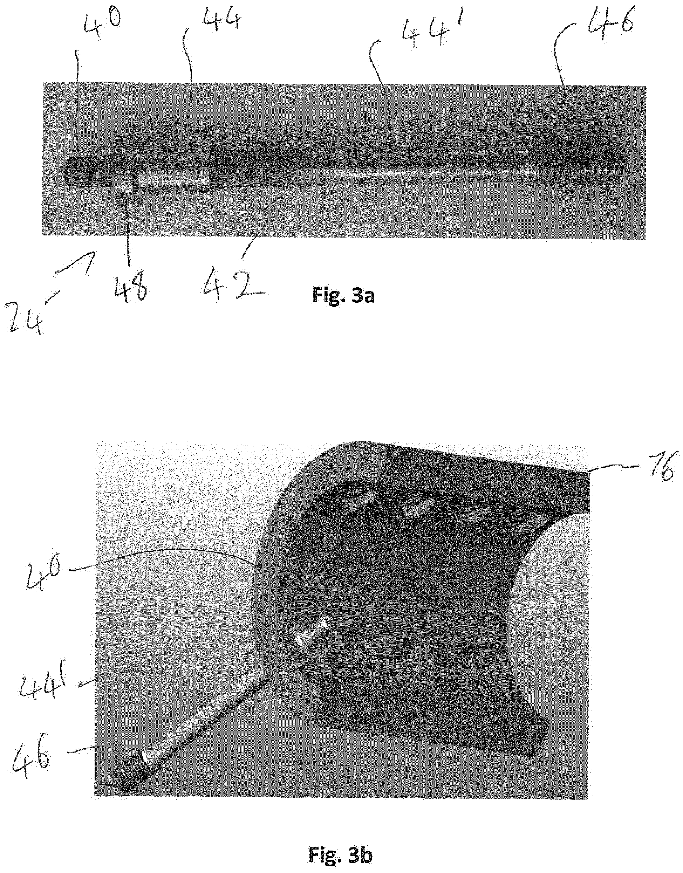

Das in den Figuren 3a und 3b gezeigte Knetelement umfasst wiederum einen stirnseitige Knetabschnitt 40 aus einem Stahl, einer Legierung oder einem Hartstoff, wie bevorzugt aus gehärtetem Werkzeugstahl, pulvermetallurgischem Stahl, ungehärtetem Stahl, rostfreiem Stahl, einer Cobalt-Legierung, einer Nickel-Legierung oder Hartmetall, und einen Fixierabschnitt 42, wobei der Fixierabschnitt 42 durch ein additives Fertigungsverfahren, wie beispielsweise selektives Laserschmelzen, erzeugt und mit dem stirnseitigen Knetabschnitt 40 des Knetelements 24 verbunden ist. Während der Knetabschnitt 40 des Knetelements 24 als Kragenbolzen ausgestaltet ist, weist der Fixierabschnitt 42 des Knetelements 24 zwei zylindrische Abschnitte 44, 44' und einen damit verbundenen Gewindeabschnitt 46 mit Außengewinde auf. Dabei ist der Fixierabschnitt 42 des Knetelements 24 - in Relation zu der Dicke der Gehäusewand - lang ausgebildet, und zwar so lang, dass er sich durch die Gehäusewand hindurch erstreckt und der Gewindeabschnitt 46 außerhalb der Gehäusewand der Misch- und Knetmaschine angeordnet ist, wo er mit einer Mutter fixiert werden kann. Der radial in Richtung des Knetabschnitts 40 orientierte zylindrische Abschnitt 44 des Fixierabschnitts 42 weist einen größeren Durchmesser als der radial weiter außen liegende zylindrische Abschnitt 44' auf. Dabei dient der zylindrische Abschnitt 44 dazu, das Knetelement 24 passgenau in die Bohrung 28 der Gehäuseschale 16 einzufügen, wohingegen der andere zylindrische Abschnitt 44' des Fixierabschnitts 42, der in der in der Gehäusewand angeordneten Bohrung verläuft, zwecks Einsparung von Material einen kleinen Durchmesser aufweist.

Erfindungsgemäß ist der Fixierabschnitt 42 durch ein additives Fertigungsverfahren, wie beispielsweise selektives Laserschmelzen, erzeugt und mit dem stirnseitigen Knetabschnitt 40 des Knetelements 24 verbunden. Hierzu wird auf die Verbindungsfläche des als Kragenbolzen ausgestalteten Knetabschnitts 40 des Knetelements 40 in einem entsprechend der gewünschten Endform programmierten 3D-Drucker eine dünne, etwa 15 bis 500 µm dicke Schicht aus Pulver, wie beispielsweise Stahlpulver, aufgebracht, bevor das Pulver durch einen Laser- oder Elektronenstrahl lokal vollständig aufgeschmolzen und dann erstarren gelassen wird. Danach wird das Bauteil um den Betrag der Schichtdicke abgesenkt und erneut Pulver aufgetragen, geschmolzen und erstarren gelassen. Diese Schritte werden so oft wiederholt, bis der Fixierabschnitt 42 fertiggestellt ist. Danach muss der Fixierabschnitt 42 lediglich mechanisch nachgearbeitet werden, indem an dessen dem Knetabschnitt 40 abgewandten Ende durch Drehen das Außengewinde 46 angebracht wird. Bei diesem Verfahren bildet sich somit eine Verbindungsfläche bzw. Grenzfläche 48 aus, welche zwischen dem Kragen des Knetabschnitts 40 und dem zylindrischen Abschnitt 44 des Fixierabschnitts 42 angeordnet ist.

### Bezugszeichenliste

- 10: Gehäuse
- 12: Schneckenwelle
- 14, 14': Gehäusehälfte
- 16: Gehäuseschale
- 18: Innenraum
- 20: Wellenstab
- 22: Flügelelement
- 24: Knetelement
- 26: Fixierelement
- 28: Aufnahme/Bohrung für Knetelement
- 29, 29', 29": (axial erstreckende) Reihe von Aufnahme für Knetelemente
- 30: Außenwand
- 32: Mutter
- 34, 34', 34": Verfahrensabschnitt
- 36: Fülltrichter
- 38: Austrittsöffnung
- 40: stirnseitiger Knetabschnitt des Knetelements
- 42: Knetabschnitt des Knetelements
- 44, 44': zylindrischen Abschnitt des Fixierabschnitts
- 46: Gewindeabschnitt des Fixierabschnitts
- 48: Verbindungsfläche bzw. Grenzfläche zwischen Knetabschnitt und Knetabschnitt
- 100: Misch- und Knetmaschine

## Patentansprüche

1. Knetelement (24) für eine Misch- und Knetmaschine (100) insbesondere für kontinuierliche Aufbereitungsprozesse umfassend einen stirnseitigen Knetabschnitt (40) zum Kontaktieren der zu mischenden und knetenden Mischung sowie einen mit dem stirnseitigen Knetabschnitt (40) verbundenen Fixierabschnitt (42) zum Fixieren des Knetelements (24) in der Misch- und Knetmaschine (100), wobei der stirnseitige Knetabschnitt (40) aus einem Stahl, einer Legierung oder einem Hartstoff gebildet ist,
**dadurch gekennzeichnet, dass**
der Fixierabschnitt (42) durch ein additives Fertigungsverfahren erzeugt und mit dem stirnseitigen Knetabschnitt (40) des Knetelements (24) verbunden ist.

2. Knetelement (24) nach Anspruch 1, **dadurch gekennzeichnet, dass** der Fixierabschnitt (42) durch ein additives Fertigungsverfahren erzeugt wird, welches aus der Gruppe ausgewählt ist, welche aus Pulverbettverfahren, Pulverdruckverfahren, Laserauftragsschweißen, Laserauftragsschweißen mit Draht, Elektronenstrahl-Pulverbettverfahren und beliebigen Kombinationen von zwei oder mehr der vorgenannten Verfahren besteht.

3. Knetelement (24) nach Anspruch 1 oder 2, **dadurch gekennzeichnet, dass** der stirnseitige Knetabschnitt (40) aus einem gehärteten Werkzeugstahl und vorzugsweise aus einem gehärteten pulvermetallurgischem Stahl bevorzugt ausgewählt aus der Gruppe bestehend aus CPM3V, CPM9V, CPM10V, CPMRexT15, M390, S390, ASP60, ASP2052, ASP2052, TSP3W, TSP1, TSP23 und beliebigen Kombination von zwei oder mehr der vorgenannten Stähle gebildet ist.

4. Knetelement (24) nach Anspruch 1 oder 2, **dadurch gekennzeichnet, dass** der stirnseitige Knetabschnitt (40) aus einem Hartmetall und vorzugsweise aus einem Hartmetall ausgewählt aus der Gruppe bestehend aus Wolframcarbid, Siliciumcarbid, Borcarbid, Wolframcarbid, Vanadiumcarbid, Titancarbid, Tantalcarbid, Titannitrid, Siliciumnitrid, Bornitrid, Siliciumnitrid, Siliciumoxid und beliebigen Kombination von zwei oder mehr der vorgenannten Hartstoffen mit einem Binder, wie Cobalt, Nickel oder Eisen, gebildet ist.

5. Knetelement (24) nach zumindest einem der vorhergehenden Ansprüche, **dadurch gekennzeichnet, dass** der stirnseitige Knetabschnitt (40) eine gemäß der DIN EN ISO 6508 gemessene Härte von mindestens 45 Rockwell, bevorzugt von mindestens 50 Rockwell, besonders bevorzugt von mindestens 55 Rockwell und ganz besonders bevorzugt von mindestens 60 Rockwell aufweist.

6. Knetelement (24) nach zumindest einem der vorhergehenden Ansprüche, **dadurch gekennzeichnet, dass** der stirnseitige Knetabschnitt (40) eine gemäß der DIN EN ISO 7438 gemessene Biegefestigkeit von mindestens 3.000 MPa, bevorzugt von mindestens 3.500 MPa und besonders bevorzugt von mindestens 4.000 MPa und/oder eine Bruchdehnung von mindestens 2%, bevorzugt von mindestens 3% und besonders bevorzugt von mindestens 4% aufweist.

7. Knetelement (24) nach zumindest einem der vorhergehenden Ansprüche, **dadurch gekennzeichnet, dass** der stirnseitige Knetabschnitt (40) aus einem Werkzeugstahl oder pulvermetallurgischen Stahl zusammengesetzt ist, welcher bei einer Temperatur von mindestens 900°C, bevorzugt mindestens 950°C und besonders bevorzugt zwischen 1.000 und 1.150°C gehärtet wurde.

8. Knetelement (24) nach zumindest einem der vorhergehenden Ansprüche, **dadurch gekennzeichnet, dass** der Fixierabschnitt (42) aus einem nicht gehärteten Stahl und vorzugsweise aus einem Vergütungsstahl gebildet ist.

9. Knetelement (24) nach zumindest einem der vorhergehenden Ansprüche, **dadurch gekennzeichnet, dass** der Fixierabschnitt eine gemäß der DIN EN ISO 6892-1 bzw. DIN 50125 gemessene Zugfestigkeit von mindestens 800 MPa, besonders bevorzugt von mindestens 1.000 MPa und ganz besonders bevorzugt von mindestens 1.200 MPa aufweist.

10. Knetelement (24) nach zumindest einem der vorhergehenden Ansprüche, **dadurch gekennzeichnet, dass** der stirnseitige Knetabschnitt (40) die Form eines Bolzens oder eines Kragenbolzens aufweist.

11. Knetelement (24) nach zumindest einem der vorhergehenden Ansprüche, **dadurch gekennzeichnet, dass** der Fixierabschnitt (42) einstückig ist und einen zylindrischen Abschnitt (44, 44') und einen damit verbundenen Gewindeabschnitt (46) aufweist.

12. Knetelement (24) nach zumindest einem der Ansprüche 1 bis 10, **dadurch gekennzeichnet, dass** der Fixierabschnitt (42) einstückig ist und zwei oder mehr zylindrische Abschnitte (44, 44') mit sich unterscheidenden Durchmessern und einen mit einem der zylindrischen Abschnitte (44, 44') verbundenen Gewindeabschnitt (46) aufweist.

13. Misch- und Knetmaschine (100) für kontinuierliche Aufbereitungsprozesse, wie zum Kneten und Mischen von partikulärem Ausgangsmaterial und/oder zur Herstellung von Granulat, Strangpressprofilen oder Formteilen, mit einem Gehäuse (10), in welchem ein von der Innenumfangsfläche des Gehäuses (10) begrenzter und in der Längsrichtung der Misch- und Knetmaschine (100) verlaufender hohler Innenraum (18) ausgebildet ist, und mit einer sich zumindest abschnittsweise in axialer Richtung durch den Innenraum (18) des Gehäuses (10) erstreckenden Schneckenwelle (12), die im Betrieb in dem Innenraum (18) des Gehäuses (10) rotiert und sich gleichzeitig in der axialen Richtung translatorisch hin- und her bewegt, wobei in dem Gehäuse (10) mindestens fünf sich von der Innenumfangsfläche des Gehäuses (10) in das Gehäuse (10) zumindest abschnittsweise hinein erstreckende Aufnahmen (28) für Knetelemente (24) vorgesehen sind,
**dadurch gekennzeichnet, dass**
in wenigstens einer der Aufnahmen (28) ein Knetelement (24) nach zumindest einem der vorhergehenden Ansprüche angeordnet ist.

14. Misch- und Knetmaschine (100) nach Anspruch 13, **dadurch gekennzeichnet, dass** die Aufnahmen (28) an der Innenumfangsfläche des Gehäuses (10) in zumindest zwei sich in der axialen Richtung über zumindest einen Abschnitt der Innenumfangsfläche des Gehäuses (10) erstreckenden Reihen (29, 29', 29") angeordnet sind und in wenigstens 10% der Aufnahmen (28) und bevorzugt in wenigstens 50% der Aufnahmen (28) jeweils ein Knetelement (24) nach zumindest einem der Ansprüche 1 bis 12 angeordnet ist.

15. Verfahren zum Herstellen eines Knetelements (24) nach zumindest einem der Ansprüche 1 bis 12, welches die nachfolgenden Schritte umfasst:
a) Formen des stirnseitigen Knetabschnitts (40) aus Stahl oder einem Hartstoff,
b) Härten des in dem Schritt a) geformten stirnseitigen Knetabschnitts (40) durch Wärmebehandlung bei einer Temperatur von mindestens 750°C, wenn in dem Schritt a) ein Stahl eingesetzt wurde und
c) Ausbilden des Fixierabschnittes durch ein additives Fertigungsverfahren, wobei der Schritt c) vorzugsweise die folgenden Schritte umfasst:
C1) Aufbringen einer Pulverschicht aus Metall oder einer Legierung auf ein Ende des in dem Schritt a) gehärteten stirnseitigen Knetabschnitts (40),
d) Schmelzen der Pulverschicht mit einem Laser,
e) Erstarren der Schmelze zu einer festen Materialschicht,
f) Aufbringen einer Pulverschicht aus Metall oder einer Legierung auf die in dem Schritt e) gebildete feste Materialschicht,
g) Schmelzen der Pulverschicht mit einem Laser,
h) Erstarren der Schmelze zu einer festen Materialschicht und
i) Wiederholen der Schritte f) bis h) bis der Fixierabschnitt (42) die gewünschte Form aufweist.
